# DEMANDE DE BREVET EUROPEEN

(11) **EP 0 725 281 A1**
(43) Date de publication de la demande: **07.08.1996**
(21) Numéro de dépôt: 96400132.5
(22) Date de dépôt: 19.01.1996
(51) Int. Cl.: G01P 3/44

(54) **Joint d'étanchéité à codeur incorporé, équipé d'un dispositif capteur d'informations, pour roulement ou palier**

(30) Priorité: 03.02.1995 FR 9501261
(71) Demandeur: SNR ROULEMENTS, F-74010 Annecy Cédex (FR)
(72) Inventeur: Nicot, Christophe, F-74000 Annecy (FR)
(74) Mandataire: Ernst-Schonberg, Michel

(57) **Abrégé**

Joint d'étanchéité à codeur incorporé équipé d'un dispositif capteur d'informations pour roulement ou palier dans lequel une garniture (14) à lèvres d'étanchéité est au contact des deux armatures (11, 15) auxquelles sont solidarisés les éléments capteur et codeur (18) et qui possèdent une portée cylindrique (12, 16) de montage, caractérisé par le fait que l'une des armatures (11) est prolongée radialement par une portée d'appui (25) et par des moyens de positionnement et de retenue (26, 27) de l'élément capteur par rapport à l'élément codeur (18).

## Description

L'invention concerne un joint d'étanchéité à codeur incorporé équipé d'un dispositif capteur d'informations pour roulement ou palier.

L'invention concerne plus particulièrement un joint d'étanchéité dans lequel une garniture à lèvres d'étanchéité est au contact de deux armatures auxquelles sont respectivement solidarisés les éléments capteur et codeur et qui possèdent une portée cylindrique de montage.

On connaît par les publications FR-A-2640706 et 2642483 un joint d'étanchéité du type prédéfini sur lequel l'élément capteur est rapporté par accrochage sur l'une des armatures.

Selon la publication FR-A-2703740, l'élément capteur est positionné devant l'élément codeur par l'intermédiaire d'un support orientable associant des glissières de montage de l'élément capteur avec un moyen d'immobilisation dudit élément capteur.

L'invention a plus particulièrement pour objet une simplification constructive importante des joints d'étanchéité, suivant laquelle le joint d'étanchéité porte un moyen de positionnement axial par rapport à une face latérale du palier ou du roulement et un moyen d'immobilisation radiale de l'élément capteur.

Selon l'invention l'armature support de l'élément capteur se prolonge radialement par une portée d'appui accolée à une surface latérale de butée.

Selon l'invention l'une des armatures est prolongée radialement par une portée d'appui et par des moyens de positionnement et de retenue de l'élément capteur par rapport à l'élément codeur.

Le joint d'étanchéité ainsi réalisé à pour avantage de supprimer l'ajustement des moyens support et de retenue de l'élément capteur ainsi que la fixation desdits moyens sur l'organe correspondant du roulement ou du palier.

Le joint d'étanchéité ainsi réalisé peut équiper tout type de roulement sans modification préalable de ses bagues de roulement.

Le roulement équipé du joint d'étanchéité conforme à l'invention possède de ce fait des caractéristiques dimensionnelles standard et autorise des montages d'application sans modification préalable des caractéristiques dimensionnelles des carters support du roulement. Les risques de déplacements générées au cours du fonctionnement du roulement dans son logement sont de ce fait supprimés.

D'autres caractéristiques et avantages de l'invention ressortiront d'exemples de réalisation du joint d'étanchéité en référence au dessin annexé dans lequel :
- la figure 1 est une vue en coupe radiale d'un joint d'étanchéité à codeur incorporé suivant la ligne I-I de la figure 2,
- la figure 2 est une vue de face d'un secteur du joint d'étanchéité représenté à la figure 1, porteur des moyens de positionnement et d'immobilisation de l'élément capteur,
- la figure 3 est une vue en coupe radiale d'un montage entre deux bagues extérieure et intérieure d'un roulement, du joint d'étanchéité à codeur incorporé représenté à la figure 1 équipé d'un élément capteur d'informations,
- la figure 4 est une vue en coupe radiale d'un montage sur un arbre tournant, du joint d'étanchéité à codeur incorporé représenté à la figure 1 équipé d'un élément capteur d'informations,
- la figure 5 est une vue de face du montage de l'élément capteur sur le joint d'étanchéité représenté à la figure 2,
- la figure 6 est une vue en coupe radiale d'une variante de réalisation du joint d'étanchéité à codeur incorporé, équipé des moyens de positionnement et d'immobilisation de l'élément capteur.

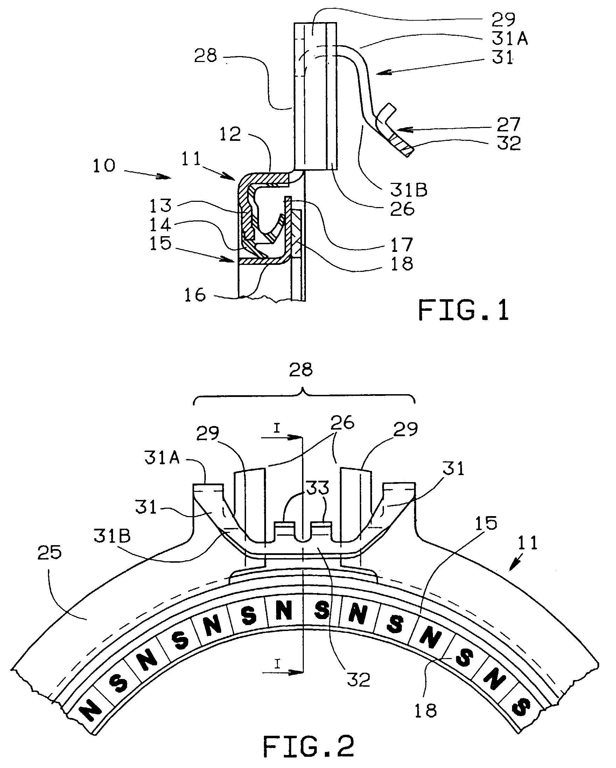

Selon les figures 1 et 2, le joint d'étanchéité 10 est constitué par une armature extérieure 11 et par une armature intérieure 15 étant entendu que le qualificatif "extérieure" concerne l'armature munie d'une portée cylindrique extérieure 12 de montage et que le qualificatif "intérieure" concerne l'armature 15 munie d'une portée cylindrique intérieure 16 de montage.

L'armature 11 est formée ainsi que cela est bien connu par un disque radial 13 solidaire de la portée 12.

De même l'armature 15 est formée par un disque radial 17 solidaire de la portée 16.

Une face du disque 17 est recouvert par un élastomère chargé de particules magnétiques dont la répartition circonférentielle représente une pluralité de pôles N-S ainsi que cela est montré à la figure 2.

L'ensemble des pôles N-S constitue l'élément codeur 18.

La face intérieure du disque 17 et la surface extérieure de la portée 16 sont en contact étanche avec les lèvres axiale et radiale d'une garniture d'étanchéité 14 surmoulée sur l'armature 11.

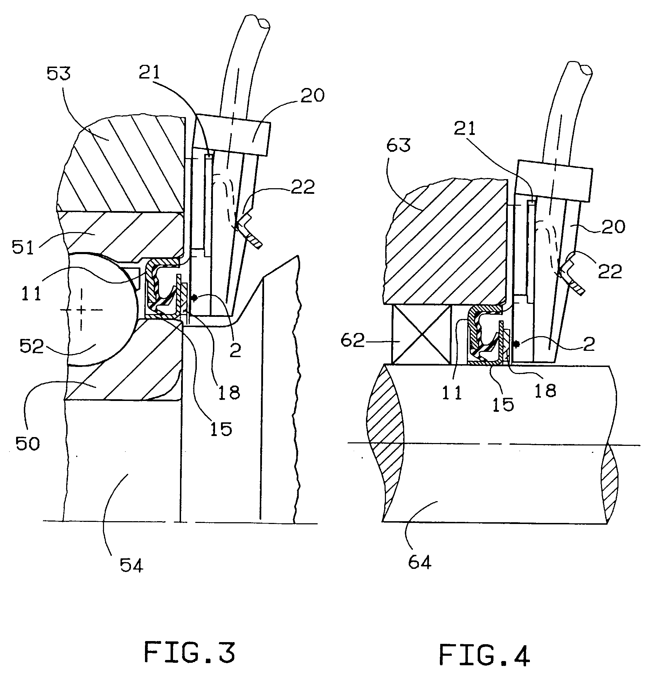

Un élément capteur 2 représenté aux figures 3 à 5 est porté par une tête de fixation 20 dont les flancs portent des rainures de montage 21 tandis que sa face, opposée à l'autre face de lecture, porte une rainure transversale 22 destinée à coopérer avec un moyen d'immobilisation et de positionnement de la tête de fixation 20 sur un moyen support.

Selon l'invention l'armature 11 est prolongée radialement par une portée d'appui 25 annulaire raccordée à la portée extérieure de montage 12.

Ainsi que cela est montré aux figures 1, 4, 6, la portée d'appui 25 se prolonge localement par une glissière de positionnement 26 qui peut être engagée dans les rainures 21 de montage de la tête de fixation 20 de l'élément capteur 2.

Les glissières de positionnement 26 et un moyen de retenue élastique 27 sont obtenus par découpage et pliage local de la portée d'appui 25 et de l'extension radiale locale 28 de ladite portée.

Les glissières de positionnement 26 sont constituées par des bords opposés de glissement découpés par poinçonnage dans l'extension 28 de la portée 25, qui se raccordent respectivement à deux plis fonctionnels opposés 29.

Le moyen de retenue 27 est constitué par un étrier 30 dont les branches élastiques fléchies 31 se raccordent à un segment d'immobilisation 32 et s'étendent respectivement entre deux plis 31a, 31b localisés à la fois sur le bord extérieur de l'extension 28 de la portée 25 et sur la jonction du segment 32 avec la branche correspondante 31.

Les branches élastiques 31, entretoisées par le segment 32 possèdent une section progressivement décroissante entre les plis 31a et 31b en fonction de l'épaisseur de l'armature 11 et de l'alliage constitutif de ladite armature.

Les figures 3, 4, 5 illustrent le montage du positionnement et d'immobilisation de la tête de fixation 20 de l'élément capteur au contact de l'armature 11.

Dans le but de parfaire le positionnement radial de la tête de fixation 20 par rapport au moyen de retenue 27, le segment d'immobilisation 32 possède une ou deux languettes de positionnement 33 destinées à venir en contact avec la rainure transversale 21 de la tête de fixation 20 de l'élément capteur.

Les montages précités des figures 3 et 4 montrent également que la portée d'appui 25 constitue un moyen d'écartement axial de l'élément capteur 2 par rapport à l'élément codeur 18 qui permet de protéger par un jeu "e" l'élément codeur des contacts accidentels avec la tête de fixation 20.

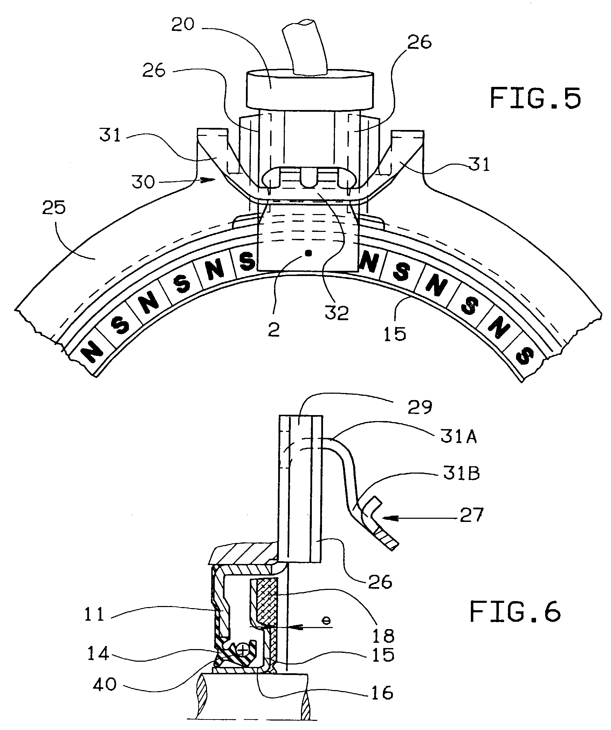

La figure 6 décrit une variante de réalisation du joint d'étanchéité dans lequel l'armature 11 porte une garniture d'étanchéité à lèvres radiales 14 au contact avec la surface extérieure de la portée 16 de l'armature 15 sous l'action d'un ressort de précontrainte 40.

Les figures 3 et 4 décrivent respectivement des montages d'application du joint d'étanchéité sur un roulement et sur un palier.

Selon la figure 3 le joint d'étanchéité est monté entre la bague intérieure 50 tournante et la bague extérieure fixe 51 d'un roulement à billes 52 monté dans le logement d'un carter fixe 53 et dont la bague intérieure 50 est entraînée par exemple par la queue 54 d'un joint de transmission.

Selon la figure 4, le joint d'étanchéité est monté entre un arbre tournant 64 et un logement de carter 63 extérieur à un palier support 62 de l'arbre 64.

Sans sortir du cadre de l'invention, il est bien entendu possible d'appliquer les mesures constructives précitées à d'autres joints d'étanchéité connus à titre d'exemple par la publication FR-A-2700588.

## Revendications

1. Joint d'étanchéité à codeur incorporé équipé d'un dispositif capteur d'informations pour roulement ou palier dans lequel une garniture (14) à lèvres d'étanchéité est au contact des deux armatures (11, 15) auxquelles sont solidarisés les éléments capteur (2) et codeur (18) et qui possèdent une portée cylindrique (12, 16) de montage, caractérisé par le fait que l'une des armatures (11) est prolongée radialement par une portée d'appui (25) et par des moyens de positionnement et de retenue (26, 27) de l'élément capteur (2) par rapport à l'élément codeur (18).

2. Joint d'étanchéité selon la revendication 1, caractérisé par le fait que la portée cylindrique extérieure de montage (12) du joint s'étend radialement par une portée d'appui (25) annulaire et que cette dernière se prolonge localement par une glissière (26) de positionnement de l'élément capteur (2) et par un moyen de retenue élastique (27) de l'élément capteur dans ladite glissière (26).

3. Joint d'étanchéité selon la revendication 2, caractérisé par le fait que la glissière (26) de montage de l'élément capteur et le moyen de retenue élastique (27) sont découpés en partie dans la portée d'appui (25) et dans une extension locale (28) de celle-ci.

4. Joint d'étanchéité selon la revendication 3, caractérisé par le fait que la glissière de montage (26) et le moyen de retenue élastique (27) sont constitués par des bords de glissement fonctionnellement pliés entre deux branches élastiques (31) fléchies et entretoisées par un segment d'immobilisation (32) de l'élément capteur (2).

5. Joint d'étanchéité selon la revendication 4, caractérisé par le fait que les branches élastiques (31) du moyen de retenue s'étendent respectivement entre deux plis (31a, 31b) localisés à la fois sur le bord extérieur de l'extension locale (28) de la portée d'appui (25) de l'armature (11) et sur la jonction du segment d'immobilisation (32) avec la branche élastique correspondante (31) et possèdent une section progressivement décroissante entre lesdits plis (31a, 31b).
